# EUROPÄISCHE PATENTANMELDUNG

(11) **EP 4 810 457 A1**
(43) Veröffentlichungstag der Anmeldung: **23.09.2026**
(21) Anmeldenummer: 25164873.9
(22) Anmeldetag: 19.03.2025
(51) Int. Cl.: C04B 35/563, B28B 1/00, C04B 35/573, B32B 18/00

(54) **VERFAHREN ZUM HERSTELLEN VON FORMKÖRPERN AUS REAKTIONSGEBUNDENEM, MIT SILICIUM INFILTRIERTEM SILICIUMCARBID ODER BORCARBID**

(71) Anmelder: Schunk Ingenieurkeramik GmbH, 47877 Willich-Münchheide (DE)
(72) Erfinder: SCHNETTER, Lars, 53518 Wimbach (DE); GINGTER, Philipp, 41066 Mönchengladbach (DE); MINAS-PAYAMYAR, Clara, 40235 Düsseldorf (DE); JANESCH, Tim, Krefeld (DE)
(74) Vertreter: Patentanwälte Olbricht Buchhold Keulertz

(57) **Zusammenfassung**

Die Erfindung betrifft ein Verfahren zum Herstellen von Formkörpern aus reaktionsgebundenem, mit Silicium infiltriertem Siliciumcarbid oder Borcarbid, umfassend die folgenden Schritte:
a) schichtweiser monolithischer Aufbau eines Vorkörpers aus einer formlosen Primärkörnung unter Einsatz eines physikalischen oder chemischen Härtungs- oder Schmelzprozesses, wobei die Primärkörnung einen Mengenanteil von mindestens 95 Gew.-% an Siliciumcarbid [SiC] oder Borcarbid [B4C] mit einer mittleren Korngröße d50 von 1 bis 70 µm;
b) Tränken des so gebildeten Vorkörpers mit einer Tränkungssuspension enthaltend eine Flüssigkeit und Festkörper, wobei die Festkörper teilweise oder vollständig aus Kohlenstoff [C] bestehen;
c) Trocknen der Tränkungssuspension derart, dass sich Festkörper der Tränkungssuspension in den Zwischenräumen der Primärkörnung ablagern;
d) Infiltrieren des Vorkörpers mit flüssigem und/oder gasförmigem Silicium [Si] und Durchführen eines Reaktionsbrandes zur Ausbildung eines Bauteils, bei dem die abgelagerten Festkörper aus Kohlenstoff mit dem flüssigen und/oder gasförmigen Silicium sekundäres Siliciumcarbid [SiC] bilden, wobei insbesondere ein Durchdringungsverbund ausgebildet wird.

## Beschreibung

Die Erfindung betrifft ein Verfahren zum Herstellen von Formkörpern aus reaktionsgebundenem, mit Silicium infiltriertem Siliciumcarbid oder Borcarbid, gemäß Anspruch 1, einen hierdurch hergestellter Formkörper gemäß Anspruch 18 und einen Formkörper aus reaktionsgebundenem, mit Silicium infiltriertem Siliciumcarbid oder Borcarbid nach Anspruch 19.

Aus US 2010/0279007 A1 ist ein Verfahren zum Herstellen von Formkörpern aus Siliciumcarbid bekannt, bei dem ein Vorkörper, ausgehend von CAD-Daten, mittels 3D-Drucken schichtweise aus einer formlosen Primärkörnung monolithisch aufbaut wird. Die Partikelgröße der keramischen Primärkörnung aus Siliciumcarbid [SiC] liegt im Bereich von 5 bis 1.000 µm und bevorzugt zwischen 70 und 190 µm. Verfestigt wird diese keramische Primärkörnung durch ein Zweikomponenten-Bindersystem (2K-Bindersystem), das einen hohen Kohlenstoffgehalt von 30 % bis 50 % enthält. Eine erste Komponente, nämlich ein Phenolharzbindemittel oder Zucker, des 2K-Bindersystems ist gemahlen auf 50 bis 70 µm und wird vor dem Auftragen der einzelnen Schichten beim 3D-Drucken mit der Primärkörnung zu einer losen Partikelmischung gemischt.

Der Schichtauftrag der Schichten beim 3D-Drucken wird mit Schichtdicken von 0,089 mm bis 0,305 mm aus der Partikelmischung ausgeführt, wobei die erste Komponente des 2K-Bindersystems anschließend in definierten Zonen der jeweiligen Schicht durch Auftragen eines Aktivatorfluids, nämlich Aceton oder Wasser, aktiviert wird. Das Aktivatorfluid ist die zweite Komponente des 2K-Bindersystems und wird nach dem Auftrag getrocknet, wozu Wärme, UV-Licht, Elektronenstrahlen, ein Katalysator oder Feuchtigkeit durch Aussetzen an Umgebungsluft genutzt werden. Die erste Komponente des 2K-Bindersystems kann einen hohen Anteil an Kohlenstoff enthalten, der folglich durch das Vermischen mit der Primärkörnung in den Vorkörper eingebracht wird.

US 2010/279007 zeigt zudem die Verfestigung eines so erhaltenen, porösen SiC-Vorkörpers mit einer Primärkorngröße von 5-400 µm, bevorzugt 70-190 µm mittels Infiltration mit flüssigem Silicium [Si] zur Ausbildung eines Si-imprägnierten SiC-Formkörpers, um einen netzförmigen SiSiC-Verbundstoff zu erzeugen. Als nachteilhaft erweist sich, dass der Formkörper eine raue Oberfläche aufweist und die Strukturen Wandstärken von deutlich über 1 mm aufweisen müssen. Zudem ist die Festigkeit des Formkörpers verbesserungswürdig, sowohl hinsichtlich der Höhe als auch der Homogenität.

In WO 2015/055264 ist ein Verfahren zum Herstellen von Formkörpern aus reaktionsgebundenem, mit Silicium infiltriertem Siliciumcarbid oder Borcarbid angegeben, bei dem zunächst ein Vorkörper schichtweise aus einer formlosen Körnung unter Einsatz eines physikalischen oder chemischen Härtungs- oder Schmelzprozesses monolithisch aufgebaut wird. Die Körnung weist einen Mengenanteil von mindestens 95 % an Siliciumcarbid oder Borcarbid mit einer mittleren Korngröße d50 von 70 bis 200 µm auf. Der so gebildete Vorkörper wird mindestens einmal mit einer Rußsuspension (enthält Kohlenstoff [C]) getränkt, wobei als Rußsuspension eine wässrige Rußsuspension mit einem Netzmittel verwendet wird, damit die Suspension bei einem Trocknen auf die Körner im Vorkörper aufzieht. Anschließend wird der Vorkörper in Kontakt mit flüssigem oder gasförmigem Silicium [Si] gebracht, das den Vorkörper infiltriert. Bei einem anschließenden Reaktionsbrand bildet dieses Silicium [Si] zusammen mit dem Kohlenstoff [C] des Rußes sekundäres Siliciumcarbid [SiC]. Auch bei diesem Verfahren resultiert ein Formkörper mit rauer Oberfläche und die Wandstärken müssen deutlich über 1 mm stark sein. Zudem ist die Festigkeit des Formkörpers ausbaufähig, sowohl hinsichtlich der Höhe als auch der Homogenität.

Aufgabe der Erfindung ist es, ein verbessertes Verfahren zum Herstellen eines Formkörpers aus reaktionsgebundenem, mit Silicium infiltriertem Siliciumcarbid oder Borcarbid zu schaffen, wobei der Formkörper eine hohe Festigkeit und eine feine Oberfläche aufweist sowie feine Strukturen aufweisen kann.

Erfindungsgemäße Merkmale sind in den Ansprüchen 1, 18 und 19 angegeben. Ausgestaltungen sind Gegenstand der Ansprüche 2 bis 17 und 20 bis 22 sowie der Beschreibung.

Die Erfindung betrifft ein Verfahren zum Herstellen von Formkörpern aus reaktionsgebundenem, mit Silicium infiltriertem Siliciumcarbid oder Borcarbid, umfassend die folgenden Schritte: Zunächst erfolgt ein schichtweiser monolithischer Aufbau eines Vorkörpers aus einer formlosen Primärkörnung unter Einsatz eines physikalischen oder chemischen Härtungs- oder Schmelzprozesses, wobei die Primärkörnung einen Mengenanteil von mindestens 95 Gew.-% an Siliciumcarbid [SiC] oder Borcarbid [B4C] mit einer mittleren Korngröße d50 von 1 bis 70 µm, vorzugsweise 5 bis 60 µm, besonders bevorzugt 10 bis 50 µm, aufweist. Anschließend erfolgt ein Tränken des so gebildeten Vorkörpers mit einer Tränkungssuspension enthaltend eine Flüssigkeit und Festkörper, wobei die Festkörper teilweise oder vollständig aus Kohlenstoff [C] (bspw. in Form von Ruß oder Graphit) bestehen, sowie ein Trocknen der Tränkungssuspension derart, dass sich Festkörper (insbesondere die Festkörper oder zumindest ein Teil der Festkörper) der Tränkungssuspension in den Zwischenräumen der Primärkörnung ablagern, wobei insbesondere ein Aufziehen der Festkörper auf die Primärkörnung des Vorkörpers erfolgt. Danach erfolgt ein Infiltrieren des Vorkörpers mit flüssigem und/oder gasförmigem Silicium [Si] und Durchführen eines Reaktionsbrandes zur Ausbildung eines Bauteils, bei dem die abgelagerten Festkörper aus Kohlenstoff [C] mit dem flüssigen und/oder gasförmigen Silicium [Si] sekundäres Siliciumcarbid [SiC] bilden, wobei insbesondere ein Durchdringungsverbund ausgebildet wird.

Erfindungsgemäß wird so ein verfestigter Formkörper hergestellt, dessen gebildetes sekundäres Siliciumcarbid durch die Positionierung in dem Porenraum des Vorkörpers, wo Kohlenstoff in einer wählbaren Menge einbringbar ist (insbesondere durch die Tränkungssuspension, optional auch durch zusätzliche Schritte), eine stabilisierende Wirkung bereits beim Brand als auch in Verbindung mit der Primärkörnung liefert. Das (neugebildete) sekundäre Siliciumcarbid bestimmt somit die Gefügestruktur des Formkörpers, was sich anhand elektronenmikroskopischer Untersuchungen nachweisen lässt. Vorteilhaft gelingt durch die Verwendung der erfindungsgemäßen feinen Primärkörnung in Kombination mit der Einbringung des Kohlenstoffs durch Tränken die Realisierung von geringen Oberflächenrauheiten von Ra < 10 µm, feiner Strukturelemente bis 1 mm Stegbreite, sowie eines feinkörnigen und homogenen Werkstoffgefüges (insbesondere auch betreffend die Verteilung von verbleibendem, freien Silicium). Es resultiert ein feiner, homogener Gefügeaufbau mit kleinen Bereichen aus nichtreagiertem, freiem Silizium sowie einer daraus resultierenden, gleichmäßigen Sekundär-SiC-Bildung im Reaktionsbrand. Das führt zu verbesserten Materialeigenschaften, insbesondere einer hohen Festigkeit sowie einem höheren Weibull-Modul (d.h. einer verringerten Streuung der Festigkeitswerte).

Der Durchdringungsverbund umfasst insbesondere die Primärkörnung und das sekundäre Siliciumcarbid [SiC] und nicht-reagiertes Silicium [Si] und die optionalen weiteren Festkörper der Tränkungssuspension, die nicht Kohlenstoff sind, wobei insbesondere die Primärkörnung (zzgl. der optionalen weiteren Festkörper der Tränkungssuspension, die nicht Kohlenstoff sind) und das sekundäre Siliciumcarbid [SiC] ein Perkolationsskelett ausbilden. Zum Perkolationsskelett können auch noch weitere Festkörper hinzugezählt werden, die bspw. mit einem Bindemittel zum Binden der Primärkörnung beim schichtweisen monolithischen Aufbau des Vorkörpers eingebracht werden können.

Beim Infiltrieren dringt insbesondere bei Temperaturen oberhalb von 1400°C flüssiges Silicium [Si] in die offenen Poren ein.

Der Volumenanteil und die Kornverteilung der Primärkörnung im silicierten Formkörper entsprechen vorzugsweise im Wesentlichen denen der Primärkörnung im Vorkörper. Der ursprünglich im Vorkörper vor der Tränkung mit Tränkungssuspension vorhandene Porenraum entspricht im silicierten Zustand vorzugsweise dem Volumen von sekundärem Siliciumcarbid [SiC], Silicium [Si] und etwaigen im Porenraum vorhandenen Zusatzkörnungen. Entsprechend liegt dann möglichst kein freier Ruß bzw. Kohlenstoff [C] mehr in den Poren vor. Das neugebildete sekundäre Siliciumcarbid [SiC], die Primärkörnung und das freie Silicium lassen sich beispielsweise rasterelektronenmikroskopisch unterscheiden, wie beispielsweise in dem Aufsatz von J.N. Ness, T.F. Page, Microstructural evolution in reaction-bonded silicon carbide, Journal of Materials Science 21 (1986), 1377 - 1397, beschrieben.

Beim Schritt des Infiltrierens mit Silicium [Si] können Auflage-, Docht- und Tauchtränkungen vorgesehen werden. Die Entfernung zwischen der Quelle des Siliciums [Si] und zu infiltrierendem Vorkörper sollte dabei im Hinblick auf eine vollständige Infiltration nicht größer als 150 - 200 mm sein. Bei der Auflagetränkung können siliciumgefüllte SiSiC Schalen oder Silicium-Briketts, so genannte Speiser, verwendet werden, die einer waagerechten Auflagefläche auf dem Vorkörper bedürfen. Für die Tauchtränkung in einer Schmelze aus Silicium [Si] kann ein Graphittiegel genutzt werden, der groß genug ist, den kompletten Vorkörper aufzunehmen. Komplexe und/oder voluminöse Vorkörper können sich gegebenenfalls nur vollständig infiltrieren lassen, wenn auch die Quelle des Siliciums als ein ein- oder mehrteiliges komplexes, angepasstes Formteil gefertigt ist. Auch hierfür eignet sich das erfindungsgemäße Verfahren, wobei die Primärkörnung für das Formteil jedoch auch größere Korngrößen aufweisen kann.

Die mittlere Korngröße der Primärkörnung ist hier und auch im Weiteren durch Laserbeugungs-Partikelgrößenanalyse oder Siebanalytik zu bestimmen. Soweit nicht abweichend angegeben sind auch die Korngrößen weiterer erfindungsgemäßer Körnungen durch Laserbeugungs-Partikelgrößenanalyse oder Siebanalytik zu bestimmen.

Gemäß einer vorteilhaften Verfahrensausgestaltung ist vorgesehen, dass die Primärkörnung vor dem schichtweisen monolithischen Aufbau des Vorkörpers verrundet ist (d.h. es wird eine runde Primärkörnung mit hoher Sphärizität genutzt, die entweder durch einen erfolgten Verrundungsprozess an zuvor kantigen Partikeln oder in der Synthese bereits in dieser Form erzeugt wurde).

Eine ungerundete Primärkörnung aus Siliciumcarbid oder Borcarbid weist eine Kornform auf, die im Rohstoff zufällig vorliegt, insbesondere durch die genutzten Mahlverfahren. Es wurde festgestellt, dass beim Auftragen der Schichten Fehlerstellen durch inhomogene Porengrößen und bspw. durch ein Verhaken der unverrundeten Körner der Primärkörnung beim Abziehen einer Schichtoberfläche beim 3D-Druck resultieren. In diesem Zusammenhang wurde festgestellt, dass die durch Mahlen erzielte, unverrundete Primärkörnung ein Gemenge von kubischen und splittrigen Körnern ohne Homogenität ist. Das wiederum bereitet Schwierigkeiten bei der homogenen Verdichtung der Primärkörnung und führt beim Abziehen zu besagtem Verhaken der Einzelkörner, was bspw. beim Abziehen auch kleine Ritze in der Oberfläche erzeugt.

Die Sphärizität gibt an, wie nah die Körner der Primärkörnung einer perfekten Kugel kommen. Sie wird mithilfe von Bildanalysesoftware und quantitativen Formfaktoren gemessen. Durch das Verrunden nähern sich die Körner der Primärkörnung einer perfekten Kugel an, sodass die Sphärizität gegenüber dem gemahlenen Ausgangszustand ansteigt.

Die bevorzugte, verrundete Primärkörnung weist ein gutes Streu- und Fließverhalten auf, sodass dünnere und homogener verdichtete Schichten präzise ohne Fehlerstellen herstellbar sind. Zugleich wird eine höhere Schüttdichte erzielt, d.h. das zu infiltrierende Porenvolumen des Vorkörpers sinkt gegenüber kubischen und splittrigen Körnern. Die Kombination aus der feinen Primärkörnung bzw. deren geringen Korngröße und der rundlichen Kornform steigert letztlich die Festigkeit und das Weibull-Modul des Formkörpers, erlaubt feinere Bauteilstrukturen und es lässt sich eine geringer Oberflächenrauheit erzielen.

Optional ist oder wird die Primärkörnung aus Siliciumcarbid [SiC] oder Borcarbid [B4C] durch einen Verdampfungs- und Kondensationsprozess verrundet. Dabei handelt es sich um einen thermischen Prozess, bei dem vorteilhaft keine zusätzlichen Feinstpartikel resultieren.

Möglich ist neben einer thermischen Verrundung auch eine mechanische Verrundung. Eine mechanische Verrundung kann durch mechanische Aufprallkräfte und interpartikuläre Reibung erfolgen. Hierbei erfolgt insbesondere ein gezielter Materialabtrag an der Oberfläche der Primärkörnung. Der Materialabtrag in Form von Feinstpartikeln ist dann von der verrundeten Primärkörnung zu trennen. Je kleiner der Korngröße ist, desto vorteilhafter erweisen sich thermische Verrundungsprozesse gegenüber den mechanischen Verrundungsprozessen.

In Abhängigkeit der Sphärizität der Partikel resultieren unterschiedliche Schüttwinkel, welche für die Fließfähigkeit des Pulvers eine signifikante Indikation liefert. Hier gilt, dass nicht verrundete, d.h. splittrige Körnungen im Korngrößenbereich < 70 µm gewöhnlich einen Schüttwinkel > 35° aufweisen, mechanisch verrundete Körnungen gewöhnlich einen Schüttwinkel von 35° bis 30° aufweisen, thermisch verrundete Körnungen gewöhnlich einen Schüttwinkel < 30° aufweisen, jeweils ermittelt nach DIN ISO 4324.

Die Sphärizität, ermittelt mittels Bildanalysesoftware zur Auswertung von rasterelektronenmikroskopisch erzeugten Bildaufnahmen, erlaubt zudem einen Rückschluss auf das für die Verrundung eingesetzte Verfahren, d.h. thermisch verrundet Partikel sind klar von mechanisch verrundeten Partikeln zu unterscheiden, wie es beispielsweise in WO 2021 152134 A1 näher beschrieben ist.

Gemäß einer näheren Verfahrensausgestaltung weist die Primärkörnung vor dem schichtweisen monolithischen Aufbau des Vorkörpers eine (insbesondere gemittelte) Sphärizität Ψ, insbesondere nach Hakon Wadell, von wenigstens 0,85, vorzugsweise von wenigstens 0,9 auf, wobei insbesondere $Ψ = \frac{\sqrt[3]{36 π {V}^{2}}}{A} ,$ wobei V das Volumen eines Korns der Primärkörnung und A dessen Oberfläche ist. Eine Primärkörnung mit einer solchen Sphärizität lässt sich insbesondere durch Nutzen eines verrundeten Primärkorns oder durch einen Verrundungsprozess bereitstellen. Hierdurch sind die Fließfähigkeit und die Schüttdichte hoch, wobei diese hohe Sphärizität insbesondere durch Verrunden erzielbar ist. Eine durch konventionelles Mahlen allein hergestellte Primärkörnung aus Siliciumcarbid oder Borcarbid erreicht keine derart hohe Sphärizität. Die von Hakon Wadell 1935 vorgeschlagene Sphärizität eines Partikels wird als das Verhältnis der Oberfläche einer Kugel mit gleichem Volumen zur tatsächlichen Oberfläche des Partikels definiert. Je höher die Sphärizität der Primärkörnung ist, desto höher ist deren Fließfähigkeit. Daraus resultierend kann die Primärkörnung fehlerfrei mit hoher Schüttdichte aufgetragen werden und zu einem Vorkörper mit hoher Dichte verarbeitet werden.

Vorzugsweise ist die Primärkörnung derart verrundet oder wird im Verrundungsprozess derart verrundet, dass die Primärkörnung eine (insbesondere gemittelte) Sphärizität Ψ, insbesondere nach Hakon Wadell, von wenigstens 0,85, vorzugsweise von wenigstens 0,9 aufweist, wobei insbesondere $Ψ = \frac{\sqrt[3]{36 π {V}^{2}}}{A} ,$ wobei V das Volumen eines Korns der Primärkörnung und A dessen Oberfläche ist.

Weiterhin vorzugsweise weist die Primärkörnung vor dem schichtweisen monolithischen Aufbau des Vorkörpers eine Schüttdichte von wenigstens 40 % der Reindichte auf. Auch ohne die Sphärizität der Primärkörnung zu kennen, gibt die Schüttdichte Aufschluss darüber, wie stark verrundet die Primärkörnung ist. Die Schüttdichte ist durch eine Schüttdichtenmessung gemäß DIN ISO 697 zu bestimmen, wobei davon ausgegangen wird, dass runde Partikel eine höhere Schüttdichte aufweisen als weniger runde Partikel, wobei sich die runderen Partikel weniger stark nachverdichten lassen.

Weiterhin ist zu bevorzugen, dass die Primärkörnung vor dem schichtweisen monolithischen Aufbau des Vorkörpers eine Fließfähigkeit, quantifiziert anhand des Hausner-Faktors, vorzugsweise von 1,00-1,30, besonders bevorzugt von 1,00-1,25 aufweist. Auch ohne die Sphärizität der Primärkörnung zu kennen, gibt die Fließfähigkeit Aufschluss darüber, wie stark verrundet die Primärkörnung ist. Der Hausner-Faktor ist eine dimensionslose physikalische Kennzahl zur Charakterisierung von Feststoffen (pulverförmige bis stückige Schüttgüter und Haufwerke). Er errechnet sich als Quotient aus Stampfdichte und Schüttdichte bzw. als Quotient aus Schüttvolumen und Stampfvolumen. Jeder Wert über 1,00 indiziert, dass ein Nachverdichten nach dem Schütten möglich ist, bspw. durch Vibrationen, Erschütterungen oder Stampfen. Der ermittelte Hausner-Faktor kann mit folgenden subjektiven Wertungen zur Fließfähigkeit beschrieben werden:
- 1,00 - 1,11: Ausgezeichnete Fließfähigkeit
- 1,12 - 1,18: Gute Fließfähigkeit
- 1,19 - 1,25: Akzeptable Fließfähigkeit
- 1,26 - 1,34: Mäßige Fließfähigkeit
- 1,35 - 1,45: Schlechte Fließfähigkeit
- > 1,45: Sehr schlechte Fließfähigkeit

Gemäß einer näheren Verfahrensausgestaltung wird beim schichtweisen monolithischen Aufbau des Vorkörpers die Primärkörnung im Wechsel mit einem organischen Bindemittel aufgetragen, insbesondere einem organischen Bindemittel, das durch Energie aktivierbar ist, und das insbesondere keinen andersartigen Reaktionspartner im Vorkörper benötigt. Das organische Bindemittel macht den Vorkörper, insbesondere die formlose Primärkörnung, formstabil für die nachfolgenden Schritte. Mit Hilfe des organischen Bindemittels wird insbesondere der physikalische oder chemische Härtungs- oder Schmelzprozess beim schichtweisen monolithischen Aufbau eines Vorkörpers realisiert. Ein Vorteil liegt darin, dass die Primärkörnung vorab nicht mit einer (bspw. organischen) zweiten Komponente eines 2K-Bindersystems vermischt werden muss bzw. ist. Solch eine Mischung kann nämlich aufgrund einer derartigen zweiten Komponente eine unerwünschte, geringere Fließfähigkeit aufweisen als die Primärkörnung in Alleinstellung. Durch die hohe Fließfähigkeit der Primärkörnung kann jede Schicht des 3D-Drucks nach ihrem Auftrag präzise und fehlerfrei glattgezogen werden und weist eine hohe Homogenität und Schüttdichte auf. Auch Nester aus Ansammlungen einer zweiten Komponente eines 2K-Bindersystems werden innerhalb der Schicht der Primärkörnung vermieden.

Im Speziellen kann der schichtweise monolithische Aufbau durch ein Ein-Komponenten-Binder-Jetting-Verfahren mit einem organischen Bindemittel erfolgen. Auch das trägt dazu bei, dass die Primärkörnung noch ohne eine Binderkomponente und damit mit voller Fließfähigkeit seiner Körnung fehlerfrei aufgetragen werden kann. Das Ein-Komponenten-Binder-Jetting-Verfahren ist ein additives Fertigungsverfahren, bei dem ein Bindemittel insbesondere im Inkjet-Verfahren auf die Primärkörnung appliziert wird, um Pulverbereiche selektiv zur Ausbildung des Vorkörpers zu verkleben. Durch wechselweises Aufbringen mehrerer Schichten der Primärkörnung und des Bindemittels wird der Vorkörper erzeugt. Dabei ist kein Stützmaterial nötig, da der Vorkörper während des Verfahrens von nicht gebundener Primärkörnung gehalten wird.

Das organische Bindemittel kann anschließend schichtweise und/oder erst nach dem schichtweisen monolithischen Aufbau des Vorkörpers ausgehärtet werden, insbesondere durch Energieeinbringung, Wärme, beispielsweise in einem Aushärteofen, UV-Strahlung oder Mikrowellenstrahlung, und insbesondere vor dem Tränken des Vorkörpers mit der Tränkungssuspension. Nach dem Aushärten ist der Vorkörper formstabil. So ist insbesondere auch ein schichtweises Teilaushärten des organischen Bindemittels kombiniert mit einem finalen Aushärten nach dem schichtweisen monolithischen Aufbau des Vorkörpers möglich. Bei einer Aktivierung des organischen Bindemittels durch Energieeinbringung ist keine zweite Komponente als Aktivator erforderlich. Je nachdem, ob das organische Bindemittel nur lokal aufgetragen ist, kann die Energieeinbringung global appliziert werden, und wenn das organische Bindemittel großflächiger aufgetragen ist aber nur partiell ausgehärtet werden soll, kann die Energieeinbringung lokal erfolgen, bspw. durch UV-Strahlung oder Mikrowellenstrahlung.

Chemisch betrachtet, braucht das organische Bindemittel nicht aus exakt einer Komponente zu bestehen, auch wenn es als 1K-Bindersystem genutzt wird. Die Bezeichnung Ein-Komponenten-Binder-Jetting-Verfahren soll zum Ausdruck bringen, dass im Gegensatz zu dem Zwei-Komponenten-Binder-Jetting-Verfahren, keine zweite organische Komponente vorab mit der Primärkörnung vermischt werden soll, sondern lediglich mittels einem Druckkopf eine gezielte Applizierung des organischen Bindemittels auf definierte Teile der jeweils schichtweise abgelegten Primärkörnung erfolgt.

Das organische Bindemittel sollte insbesondere nicht-löslich durch die Flüssigkeit der Tränkungssuspension sein. Dies verhindert einen Verlust der Formstabilität des Vorkörpers beim Tränken. Die Flüssigkeit der Tränkungssuspension kann beispielsweise wasserbasiert sein. Dann sollte das organische Bindemittel nicht wasserlöslich sein.

Optional kann das organische Bindemittel ein Harz bzw. Harzbindemittel sein. Hierdurch gelingt eine gute Verfestigung des Vorkörpers.

Eine optionale Ergänzung des Verfahrens kann darin bestehen, dass das organische Bindemittel (a) eine Zusatzkörnung aus Festkörpern aus Siliciumcarbid [SiC], Borcarbid [B4C] und/oder Kohlenstoff [C] (bspw. in Form von Ruß oder Graphit) enthält, und/oder (b) gelöste präkeramische Polymere enthält, wobei die Zusatzkörnung vorzugsweise einen Mengenanteil von höchstens 5 Vol.-% bezogen auf die Primärkörnung umfasst, und wobei die Zusatzkörnung vorzugsweise eine mittlere Korngröße d50 bis 5,0 µm, vorzugsweise bis 2,0 µm aufweist. Mit Hilfe der optional in Zwischenräumen der Primärkörnung eingebrachten Zusatzkörnung aus Siliciumcarbid [SiC] oder Borcarbid [B4C] resultiert eine Körnungsmischung, deren Schüttdichte höher ist als diejenige der Primärkörnung in Alleinstellung. Auch die mittlere Korngröße der Zusatzkörnung lässt sich durch eine Laserbeugungs-Partikelgrößenanalyse bestimmen. Der Vorteil der Einbringung der Zusatzkörnung mit dem organischen Bindemittel liegt darin, dass eine Entmischung der Zusatzkörnung von der Primärkörnung vermieden und eine homogenere Verteilung der Zusatzkörnung in der Primärkörnung erzielt wird. Der Vorteil der Zusatzkörnung in Form von Kohlenstoff besteht darin, dass in den Zwischenräumen der Primärkörnung zusätzliche Partikel aus Kohlenstoff eingebracht sind. Insbesondere lassen sich mittels dem Bindemittel Bereiche zwischen den Primärkörnern der Einzelschichten besser erreichen als mit der Tränkungssuspension am gesamten Vorkörper. Dieser zusätzliche Kohlenstoff des organischen Bindemittels bildet zusätzliche Keimzellen für das Aufwachsen von sekundärem Siliciumcarbid, sodass dessen Kornstruktur besonders fein und homogen ist. Mit Hilfe der optionalen gelösten präkeramische Polymere kann erreicht werden, dass die finale Dichte des Formkörpers durch die daraus in der thermischen Behandlung resultierenden keramischen Phasen weiter erhöht wird.

Weiterhin ist eine Verfahrensausgestaltung zu bevorzugen, bei der der schichtweise monolithische Aufbau des Vorkörpers ausgehend von Konstruktionsdaten mittels eines 3D-Druckers erfolgt. Bevorzugt handelt es sich um einen 3D-Drucker mit Pulverbett für die Primärkörnung. Weiterhin bevorzugt wird mit einem Druckkopf des 3D-Druckers das organische Bindemittel appliziert.

Das schichtweise Aufbauen des Vorkörpers erfolgt vorzugsweise in Schichtstärken von 5 bis 500 µm. Durch die kleinen Partikelgrößen der Primärkörnung und insbesondere bei verrundeter Primärkörnung mit damit einhergehender guter Fließfähigkeit und hoher Schüttdichte lassen sich sehr dünne Schichtstärken präzise vorbereiten und dann binden, bspw. durch das Ein-Komponenten-Binder-Jetting-Verfahren. Auf diese Weise wird innerhalb der Schichtstärke eine hohe Homogenität erzielt.

Im Speziellen kann der schichtweise monolithische Aufbau des Vorkörpers basierend auf Konstruktionsdaten eines CAD-Körpers erfolgen.

Als günstig erweist sich, wenn die vorausgehenden Schritte derart ausgeführt sind, dass der Vorkörper vor dem Tränken eine Porosität von mindestens 40 Vol.-% mit vorzugsweise einem Medianwert der Porengrößenverteilung von mindestens 5 µm. Dies erlaubt noch eine gute Benetzung der Primärkörnung und der optionalen Zusatzkörnung mit der Tränkungssuspension selbst bei hoher Sphärizität und damit Schüttdichte. Durch die Mindestporösität wird zugleich erreicht, dass Kohlenstoff in hinreichender Menge in die Poren eindringen und dort abgelagert werden kann, optional auch eine Zusatzkörnung. Vorzugsweise beträgt die Porosität maximal 40 Vol.-%.

Besonders hohe Festigkeiten lassen sich erzielen, wenn das verfahrensgemäße Tränken mit der Tränkungssuspension und dessen Trocknen, das Infiltrieren und das Durchführen des Reaktionsbrandes derart aufeinander abgestimmt sind, dass das Bauteil einen Gehalt an freiem Silicium [Si] von maximal 20 Gew.-%, vorzugsweise maximal 15 Gew.-% aufweist.

Zu einer hohen Festigkeit trägt auch bei, wenn das verfahrensgemäße Tränken mit der Tränkungssuspension und dessen Trocknen, das Infiltrieren und das Durchführen des Reaktionsbrandes derart aufeinander abgestimmt sind, dass das Bauteil Siliciumansammlungen von freiem Silicium aufweist, von denen 90 % ein kleineres Volumen aufweisen als die mittlere Korngröße d50 der Primärkörnung; und/oder von denen 90 % einen kleineren Durchmesser aufweisen als 50 µm. Als Siliciumansammlungen sind Knotenpunkte mit im Verhältnis größeren Volumina zu verstehen, wobei die Knotenpunkte jedoch durchaus über ein Netzwerk dünnerer Zweige aus Silicium verbunden sein können.

Vorteilhafterweise wird das Verfahren so ausgeführt, dass das Bauteil eine Oberflächenrauheit von Ra < 10 µm, vorzugsweise Ra < 8 µm aufweist. Dazu trägt insbesondere die feine Primärkörnung in Kombination mit einer hohen Fließfähigkeit bei. Die Oberflächenrauheit ist durch Bestimmen eines Durchschnittswerts aller Abweichungen von einer geraden Linie innerhalb einer zu messenden Länge mit einem Profilometer oder einem Laserscanner zu bestimmen.

Weiterhin kann die verfahrensgemäß genutzte Tränkungssuspension wasserbasiert sein und/oder Wasser als Flüssigkeit aufweisen.

Des Weiteren kann die Tränkungssuspension ein Netzmittel aufweisen bzw. enthalten. Das Netzmittel ist vom Fachmann wählbar. Es dient zunächst dazu, dass die Tränkungssuspension beim Tränken einfach in die Poren der Primärkörnung eindringen kann. Beim Trocknen dient das Netzmittel dazu, ein Agglomerieren des Kohlenstoffs im freien Porenraum zu verhindern. Beides wird dadurch erreicht, dass die Tränkungssuspension, insbesondere deren Flüssigkeit, mit dem Netzmittel eine geringere Oberflächenspannung aufweist als ohne solch ein Netzmittel. Damit kann die Flüssigkeit der Tränkungssuspension einerseits die Primärkörnung besser benetzen, und andererseits die enthaltenen Festkörper in der Tränkungssuspension besser benetzen. Beim Trocknen liegt durch das Netzmittel sehr lange ein sich reduzierender Film der Flüssigkeit zwischen den Festkörpern, und zwar als relativ homogene aufgezogene Schicht auf der Primärkörnung

Weiter optional kann die Tränkungssuspension Festkörper aus Siliciumcarbid [SiC] oder Borcarbid [B4C] enthalten, und/oder gelöste Polymere oder gelöste präkeramische Polymere enthalten. Neben dem optionalen Eintrag weiterer Festkörper mit Hilfe des Bindemittels (insbesondere während des Druckprozesses), dort insbesondere schichtweise, kann so auch durch die Tränkungssuspension die Packungsdichte der Carbide bzw. der Kohlenstoffanteil im Vorkörper erhöht werden.

Die Einbringung von gelösten Polymeren oder gelösten präkeramischen Polymeren trägt dazu bei, dass der Vorkörper mit einem Ausgangsstoff für die Bildung von Siliziumcarbid und/oder Borcarbid angereichert wird. Dieser Ausgangsstoff wird während einer nachträglichen thermischen Behandlung unter Vakuum oder Schutzgas zu den jeweiligen Carbiden bzw. weiterem Kohlenstoff umgewandelt.

Des Weiteren sollten die Festkörper aus Siliciumcarbid [SiC], Borcarbid [B4C] und Kohlenstoff der Tränkungssuspension eine mittlere Korngröße d50 aufweisen, die maximal 1/10 so groß ist wie die mittlere Korngröße d50 der Primärkörnung.

Zur homogenen und hinreichenden Einbringung von Festkörpern (Kohlenstoff und/oder Siliciumcarbid und/oder Borcarbid) bietet es sich verfahrensgemäß an, das Tränken des Vorkörpers mit der Tränkungssuspension und das Trocknen der Tränkungssuspension mehrfach wiederholt durchzuführen.

Die Erfindung betrifft außerdem einen Formkörper erhalten durch ein Verfahren, wie es vorstehend und in den Ansprüchen angegeben ist. Ein solcher Formkörper zeichnet sich aufgrund der feinen Primärkörnung dadurch aus, dass der Durchdringungsverbund aus Primärkörnung, sekundärem Siliciumcarbid, freiem Silicium und etwaigen weiteren enthalten Festkörpern besonders fein strukturiert ist, was zu einer hohen Festigkeit, wenigen Strukturfehlern, einem hohen Weibull-Modul und einer geringen Oberflächenrauheit führt. Der Formkörper kann insbesondere Bauteilstrukturen mit unter 1 mm Stegbreite aufweisen. Diese sind insbesondere aufgrund der feinen und homogenen Gefügestruktur stabil.

Weiterhin betrifft die Erfindung einen Formkörper aus reaktionsgebundenem, mit Silicium infiltriertem Siliciumcarbid oder Borcarbid, umfassend eine Struktur aus einer Primärkörnung aus Siliciumcarbid [SiC] oder Borcarbid [B4C] mit einer mittleren Korngröße d50 von 1 bis 70 µm, vorzugsweise 5 bis 60 µm, besonders bevorzugt 10 bis 50 µm, und umfassend sekundäres Siliciumcarbid [SiC] und Silicium [Si] in Zwischenräumen der Struktur aus der Primärkörnung, wobei insbesondere ein Durchdringungsverbund ausgebildet ist. Auch ein solcher Formkörper zeichnet sich aufgrund der feinen Primärkörnung dadurch aus, dass der Durchdringungsverbund aus Primärkörnung, sekundärem Siliciumcarbid, freiem Silicium und etwaigen weiteren enthalten Festkörpern besonders fein strukturiert ist, was zu einer hohen Festigkeit, wenigen Strukturfehlern, einem hohen Weibull-Modul und einer geringen Oberflächenrauheit führt. Der Formkörper kann insbesondere Bauteilstrukturen mit unter 1 mm Stegbreite aufweisen. Diese sind insbesondere aufgrund der feinen Gefügestruktur stabil.

Als besonders vorteilhaft erweist es sich, wenn die Primärkörnung verrundet ist; und/oder eine Sphärizität Ψ, insbesondere nach Hakon Wadell, von wenigstens 0,85, vorzugsweise von wenigstens 0,9 aufweist, wobei insbesondere $Ψ = \frac{\sqrt[3]{36 π {V}^{2}}}{A} ,$ wobei V das Volumen eines Korns der Primärkörnung und A dessen Oberfläche ist; und/oder eine Schüttdichte von wenigstens 40 % der Reindichte aufweist. Diese Merkmale der Primärkörnung erlauben eine hohe homogene Packungsdichte der Primärkörnung, sodass die Gefügestruktur des Formkörpers besonders fein und homogen ist.

Optional kann in den Zwischenräumen der Struktur aus der Primärkörnung eine Zusatzkörnung aus Siliciumcarbid [SiC], Borcarbid [B4C] angeordnet sein, wobei die Zusatzkörnung vorzugsweise einen Mengenanteil von höchstens 5 Vol.-% bezogen auf die Primärkörnung umfasst, und wobei die Zusatzkörnung vorzugsweise eine mittlere Korngröße d50 bis 5,0 µm, vorzugsweise bis 2,0 µm aufweist. Durch die Zusatzkörnung ist die Packdichte aus Primärkörnung und Zusatzkörnung besonders hoch. Die Struktur aus sekundärem Siliciumcarbid und freiem Silicium wird durch die Zusatzkörnung noch weiter verfeinert. Entsprechend ist der Formkörper besonders fest, hat besonders wenige Strukturfehler, und ein besonders hohes Weibull-Modul.

Gemäß einer näheren Ausgestaltung weist der Formkörper einen Gehalt an freiem Silicium [Si] von maximal 20 Gew.-%, vorzugsweise maximal 15 Gew.-% auf. Entsprechend ist umgekehrt der Anteil an sekundärem Siliciumcarbid [SiC] besonders hoch. Das gelingt insbesondere durch die homogene Gefügestruktur der feinen Primärkörnung, die eine homogene Ablagerung des Kohlenstoffs beim Tränkungsschritt ermöglicht. Entsprechend steht eine relativ gleichverteilte Menge an Kohlenstoff für das infiltrierende Silicium als Reaktionspartner bereit.

Des Weiteren kann der Formkörper durch die jeweiligen Ergebnisse der einzelnen, beschriebenen Verfahrensschritte näher ausgestaltet sein.

Weitere Merkmale, Einzelheiten und Vorteile der Erfindung ergeben sich aus dem Wortlaut der Ansprüche. Die Erfindung ist nicht auf eine der vorbeschriebenen Ausführungsformen beschränkt, sondern in vielfältiger Weise abwandelbar.

Sämtliche aus den Ansprüchen und der Beschreibung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

## Patentansprüche

1. Verfahren zum Herstellen von Formkörpern aus reaktionsgebundenem, mit Silicium infiltriertem Siliciumcarbid oder Borcarbid, umfassend die folgenden Schritte:
a) schichtweiser monolithischer Aufbau eines Vorkörpers aus einer formlosen Primärkörnung unter Einsatz eines physikalischen oder chemischen Härtungs- oder Schmelzprozesses, wobei die Primärkörnung einen Mengenanteil von mindestens 95 Gew.-% an Siliciumcarbid [SiC] oder Borcarbid [B4C] mit einer mittleren Korngröße d50 von 1 bis 70 µm, vorzugsweise 5 bis 60 µm, besonders bevorzugt 10 bis 50 µm, aufweist;
b) Tränken des so gebildeten Vorkörpers mit einer Tränkungssuspension enthaltend eine Flüssigkeit und Festkörper, wobei die Festkörper teilweise oder vollständig aus Kohlenstoff [C] bestehen;
c) Trocknen der Tränkungssuspension derart, dass sich Festkörper der Tränkungssuspension in den Zwischenräumen der Primärkörnung ablagern;
d) Infiltrieren des Vorkörpers mit flüssigem und/oder gasförmigem Silicium [Si] und Durchführen eines Reaktionsbrandes zur Ausbildung eines Bauteils, bei dem die abgelagerten Festkörper aus Kohlenstoff mit dem flüssigen und/oder gasförmigen Silicium sekundäres Siliciumcarbid [SiC] bilden, wobei insbesondere ein Durchdringungsverbund ausgebildet wird.

2. Verfahren nach einem der vorhergehenden Ansprüche, **dadurch gekennzeichnet, dass** die Primärkörnung vor dem schichtweisen monolithischen Aufbau des Vorkörpers verrundet ist, oder ein Verrundungsprozess durchgeführt wird, bei dem die Sphärizität der Primärkörnung gesteigert wird.

3. Verfahren nach einem der vorhergehenden Ansprüche, **dadurch gekennzeichnet, dass** die Primärkörnung vor dem schichtweisen monolithischen Aufbau des Vorkörpers eine Fließfähigkeit, quantifiziert anhand des Hausner-Faktors, vorzugsweise von 1,00-1,30, besonders bevorzugt von 1,00-1,25 aufweist.

4. Verfahren nach einem der vorhergehenden Ansprüche, **dadurch gekennzeichnet, dass** die Primärkörnung vor dem schichtweisen monolithischen Aufbau des Vorkörpers eine Schüttdichte von wenigstens 40 % der Reindichte aufweist.

5. Verfahren nach einem der vorhergehenden Ansprüche, **dadurch gekennzeichnet, dass** die Primärkörnung vor dem schichtweisen monolithischen Aufbau des Vorkörpers eine Sphärizität Ψ, insbesondere nach Hakon Wadell, von wenigstens 0,85, vorzugsweise von wenigstens 0,9 aufweist, wobei insbesondere $Ψ = \frac{\sqrt[3]{36 π {V}^{2}}}{A} ,$ wobei V das Volumen eines Korns der Primärkörnung und A dessen Oberfläche ist.

6. Verfahren nach einem der vorhergehenden Ansprüche, **dadurch gekennzeichnet, dass** beim schichtweisen monolithischen Aufbau des Vorkörpers die Primärkörnung im Wechsel mit einem organischen Bindemittel aufgetragen wird.

7. Verfahren nach einem der vorhergehenden Ansprüche, **dadurch gekennzeichnet, dass** der schichtweise monolithische Aufbau durch ein Ein-Komponenten-Binder-Jetting-Verfahren mit einem organischen Bindemittel erfolgt.

8. Verfahren nach einem der Ansprüche 6 oder 7, **dadurch gekennzeichnet, dass** das organische Bindemittel schichtweise oder erst nach dem schichtweisen monolithischen Aufbau des Vorkörpers ausgehärtet wird.

9. Verfahren nach einem der Ansprüche 6 bis 8, **dadurch gekennzeichnet, dass** das organische Bindemittel
- eine Zusatzkörnung aus Festkörpern aus Siliciumcarbid [SiC], Borcarbid [B4C] und/oder Kohlenstoff enthält und/oder
- gelöste präkeramische Polymere enthält.

10. Verfahren nach einem der vorhergehenden Ansprüche, **dadurch gekennzeichnet, dass** der schichtweise monolithische Aufbau des Vorkörpers ausgehend von Konstruktionsdaten mittels eines 3D-Druckers erfolgt.

11. Verfahren nach einem der vorhergehenden Ansprüche, **dadurch gekennzeichnet, dass** das schichtweise Aufbauen des Vorkörpers in Schichtstärken von 5 bis 500 µm erfolgt.

12. Verfahren nach einem der vorhergehenden Ansprüche, **dadurch gekennzeichnet, dass** der Vorkörper vor dem Tränken eine Porosität von mindestens 40 Vol.-% beinhaltet, mit vorzugsweise einem Medianwert der Porengrößenverteilung von mindestens 5 µm.

13. Verfahren nach einem der vorhergehenden Ansprüche, **dadurch gekennzeichnet, dass** das Tränken mit der Tränkungssuspension und deren Trocknen, das Infiltrieren und das Durchführen des Reaktionsbrandes derart aufeinander abgestimmt sind, dass das Bauteil einen Gehalt an freiem Silicium [Si] von maximal 20 Gew.-%, vorzugsweise maximal 15 Gew.-% aufweist.

14. Verfahren nach einem der vorhergehenden Ansprüche, **dadurch gekennzeichnet, dass** das Bauteil eine Oberflächenrauheit von Ra < 10 µm, vorzugsweise Ra < 8 µm aufweist.

15. Verfahren nach einem der vorhergehenden Ansprüche, **dadurch gekennzeichnet, dass** die Tränkungssuspension ein Netzmittel enthält.

16. Verfahren nach einem der vorhergehenden Ansprüche, **dadurch gekennzeichnet, dass** die Tränkungssuspension
- Festkörper aus Siliciumcarbid [SiC] oder Borcarbid [B4C] enthält und/oder
- gelöste präkeramische Polymere enthält.

17. Verfahren nach Anspruch 16, **dadurch gekennzeichnet, dass** die Festkörper aus Siliciumcarbid [SiC], Borcarbid [B4C] und Kohlenstoff der Tränkungssuspension eine mittlere Korngröße d50 aufweisen, die maximal 1/10 so groß ist wie die mittlere Korngröße d50 der Primärkörnung.

18. **Formkörper** erhalten durch ein Verfahren gemäß einem der Ansprüche 1 bis 17.

19. **Formkörper** aus reaktionsgebundenem, mit Silicium infiltriertem Siliciumcarbid oder Borcarbid, umfassend:
- eine Struktur aus einer Primärkörnung aus Siliciumcarbid [SiC] oder Borcarbid [B4C] mit einer mittleren Korngröße d50 von 1 bis 70 µm, vorzugsweise 5 bis 60 µm, besonders bevorzugt 10 bis 50 µm;
- sekundäres Siliciumcarbid [SiC] und Silicium in Zwischenräumen der Struktur aus der Primärkörnung,
wobei insbesondere ein Durchdringungsverbund ausgebildet ist.

20. Formkörper nach Anspruch 19, **dadurch gekennzeichnet, dass** die Primärkörnung:
- verrundet ist; und/oder
- eine Sphärizität Ψ, insbesondere nach Hakon Wadell, von wenigstens 0,85, vorzugsweise von wenigstens 0,9 aufweist, wobei insbesondere $Ψ = \frac{\sqrt[3]{36 π {V}^{2}}}{A} ,$ wobei V das Volumen eines Korns der Primärkörnung und A dessen Oberfläche ist; und/oder
- eine Schüttdichte von wenigstens 40 % der Reindichte aufweist.

21. Formkörper nach einem der Ansprüche 19 oder 20, **dadurch gekennzeichnet, dass** in den Zwischenräumen der Struktur aus der Primärkörnung eine Zusatzkörnung aus Siliciumcarbid [SiC], Borcarbid [B4C] angeordnet ist, wobei die Zusatzkörnung vorzugsweise einen Mengenanteil von höchstens 5 Vol.-% bezogen auf die Primärkörnung umfasst, und wobei die Zusatzkörnung vorzugsweise eine mittlere Korngröße d50 bis 5,0 µm, vorzugsweise bis 2,0 µm aufweist.

22. Formkörper nach einem der Ansprüche 19 bis 21, **dadurch gekennzeichnet, dass** dieser einen Gehalt an freiem Silicium [Si] von maximal 20 Gew.-%, vorzugsweise maximal 15 Gew.-% aufweist.
